# EUROPÄISCHE PATENTANMELDUNG

(11) **EP 1 772 350 A1**
(43) Veröffentlichungstag der Anmeldung: **11.04.2007**
(21) Anmeldenummer: 06020501.0
(22) Anmeldetag: 29.09.2006
(51) Int. Cl.: B62D 13/04, A01B 59/042

(54) **An eine Zugmaschine über eine Zugdeichsel ankuppelbare landwirtschaftliche Verteilmaschine**

(30) Priorität: 05.10.2005 DE 102005047570
(71) Anmelder: Amazonen-Werke H. Dreyer GmbH & Co. KG, 49205 Hasbergen (DE)
(72) Erfinder: Marquering, Johannes, Dr., 49176 Borgloh (DE); Oberheide, Friedrich, 49143 Bissendorf (DE)

(57) **Zusammenfassung**

An eine Zugmaschine über eine Zugdeichsel ankuppelbare landwirtschaftliche Verteilmaschine, wie Feldspritze oder Düngerstreuer, mit einem Laufräder und Rahmen aufweisenden Fahrgestell, wobei die Zugdeichsel mittels eines eine aufrechte Achse aufweisenden Gelenkes verschwenkbar am Rahmen und zwischen der Deichsel und dem Rahmen zumindest ein Stellelement zum Verschwenken der Deichsel um die aufrechte Achse angeordnet ist, wobei Mittel vorhanden sind, um das Stellelement derart zum Verschwenken der Deichsel anzusteuern, dass die Räder der Verteilmaschine zumindest annähernd der Radspur der Hinterräder der Zugmaschine folgen. Um das selbst bei dem schnellen Durchfahren enger Wendekurven am Feldende sichergestellt ist, dass eine kritische Kippgefahr für die Verteilmaschine in einfacher Weise verhindert wird, ist vorgesehen, dass den Mitteln eine geschwindigkeitsabhängige Steuerungseinrichtung zugeordnet ist, und zwar derart, dass oberhalb einer festgelegten Fahrgeschwindigkeit aufgrund der an das Stellelement von der Steuerungseinrichtung übermittelten Signale die Deichsel im verringerten Maße verschwenkt wird.

## Beschreibung

Die Erfindung betrifft eine an eine Zugmaschine über eine Zugdeichsel ankuppelbare landwirtschaftliche Verteilmaschine gemäß des Oberbegriffes des Patentanspruches 1.

Eine derartige Verteilmaschine ist durch die DE 41 42 604 A1. bekannt. Diese Maschine ist als einachsige Verteilmaschine ausgebildet und weist eine gegenüber dem Rahmen der Verteilmaschine verschwenkbare Deichsel auf, so dass die Winkelanstellung der Deichsel gegenüber dem Rahmen bei Kurvenfahrt über einen zwischen dem Rahmen und der Deichsel angeordneten Stellzylinder veränderbar ist. Hierdurch kann ein spurgetreuer Nachlauf der Laufräder der Maschine in der Spur des die Maschine ziehenden Schleppers erreicht werden, d.h., dass durch Verschwenken der Deichsel erreicht wird, dass die Räder der Verteilmaschine zumindest annähernd der Radspur der Hinterräder der Zugmaschine folgen. Diese Deichsellenkungen haben sich in der Praxis bewährt, jedoch ist die Kippsicherheit der Verteillmaschine bei dem engen Durchfahren von Kurven beim Wendevorgang am Feldende, wenn der Wendevorgang mit relativ hoher Geschwindigkeit durchgeführt wird, erheblich gefährdet.

Der Erfindung liegt die Aufgabe zugrunde, dass selbst bei dem schnellen Durchfahren enger Wendekurven am Feldende sichergestellt ist, dass eine kritische Kippgefahr für die Verteilmaschine in einfacher Weise verhindert wird.

Diese Aufgabe wird erfindungsgemäß durch die kennzeichnenden Merkmale des Patentanspruches 1 gelöst. Infolge dieser Maßnahmen wird durch das Verschwenken der Zugdeichsel in verzögerter Weise und/oder mit einer geringen Geschwindigkeit sichergestellt, dass bei einem schnellen Durchfahren der Wendekurven die Verteilmaschine nicht in einen kritischen Kippzustand gerät. Hierbei wird bewusst in Kauf genommen, dass die Räder der Verteilmaschine beim Wenden nicht oder nicht im vollen Umfange der Radspur der Hinterräder des Zugfahrzeuges folgen. Somit wird durch das verlangsamte Verschwenken der Deichsel beim schnellen Durchfahren der Wendekurve einem Umkippen der Verteilmaschine entgegengewirkt. Dies bedeutet, je schneller die Kurve durchfahren wird, desto geringer und/oder langsamer wird die Zugdeichsel verschwenkt.

Um das verringerte und/oder verlangsamte Verschwenken der Zugdeichsel bei sich erhöhender Fahrtgeschwindigkeit sicherzustellen, ist vorgesehen, dass bei zunehmender Fahrgeschwindigkeit von der Steuerungseinrichtung Signale zum Verschwenken der Deichsel mit verringerter Verschwenkungsgeschwindigkeit an das Stellelement übermittelt werden.

Wenn die Fahrgeschwindigkeit sich erhöht, werden Signale zum Verschwenken der Deichsel mit abnehmender Verschwenkungsgeschwindigkeit übermittelt.

In einfacher Weise lässt sich das verlangsamte Verschwenken der Deichsel dadurch realisieren, dass die Steuerungseinrichtung das Stellelement mit vorzugsweise zeitlich einstellbaren Taktzeiten ansteuert.

Hierbei weist die Steuerungseinrichtung zur Ansteuerung des Stellelementes ein geschwindigkeitsabhängiges Zeitglied auf. Um die Ansteuerung des Stellelementes einstellen zu können, ist vorgesehen, dass das Zeitglied die einstellbare Betätigungszeit des Stellelementes und die zwischen den einzelnen Betätigungszeiten liegenden Pausenzeiten aufweist.

Hierbei könnten die Betätigungszeiten und/oder Intervalle einstellbar sein.

Um die Verschwenkungsgeschwindigkeit der Deichsel einstellen zu können, ist vorgesehen, dass die Verschwenkungsgeschwindigkeit der Deichsel durch das Verstellelement durch eine dem Stellelement zugeordnete und von der Steuerungseinrichtung ansteuerbare Einstelleinrichtung einstellbar ist. Diese kann bei einer Stelleinrichtung, die als Hydraulikzylinder ausgebildet ist, dadurch realisiert werden, dass das Stellelement als Hydraulikzylinder ausgebildet ist, dass die Einstelleinrichtung als Hydraulikventil, vorzugsweise als Proportionalventil ausgebildet ist.

Weitere Einzelheiten der Erfindung sind der Beispielsbeschreibung und den Zeichnungen zu entnehmen. Hierbei zeigen
- Fig. 1: das Durchfahren einer Kurve des Zugfahrzeuges mit der angekuppelten landwirtschaftlichen Verteilmaschine, wobei die Räder der Verteilmaschine der Radspur der Hinterräder des Zugfahrzeuges folgen, in schematischer Darstellung und in Draufsicht,

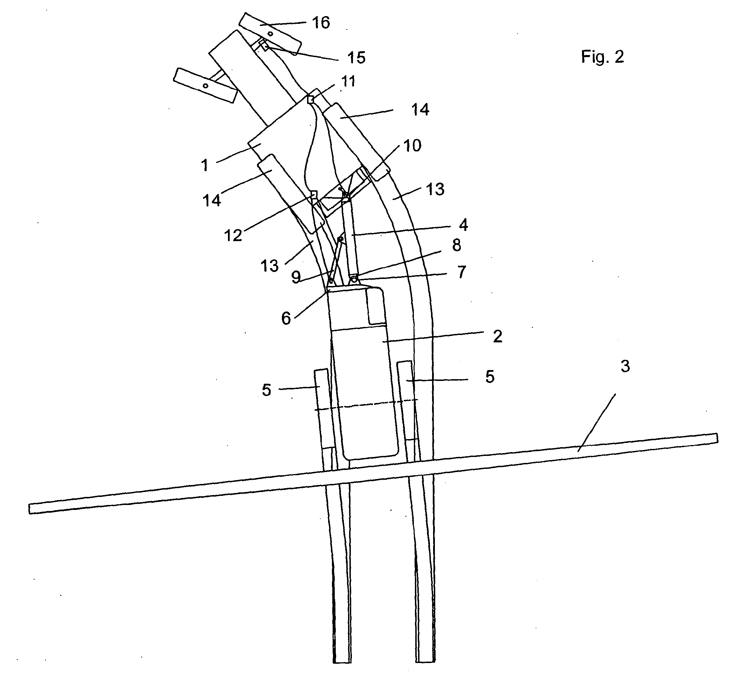

- Fig. 2: das Durchfahren einer Kurve des Zugfahrzeuges mit der angekuppelten landwirtschaftlichen Verteilmaschine, wobei die Räder der Verteilmaschine der Radspur der Hinterräder des Zugfahrzeuges nicht folgen, in schematischer Darstellung und in Draufsicht und
- Fig. 3: das Funktionsschema der Ansteuerung des Deichselzylinders.

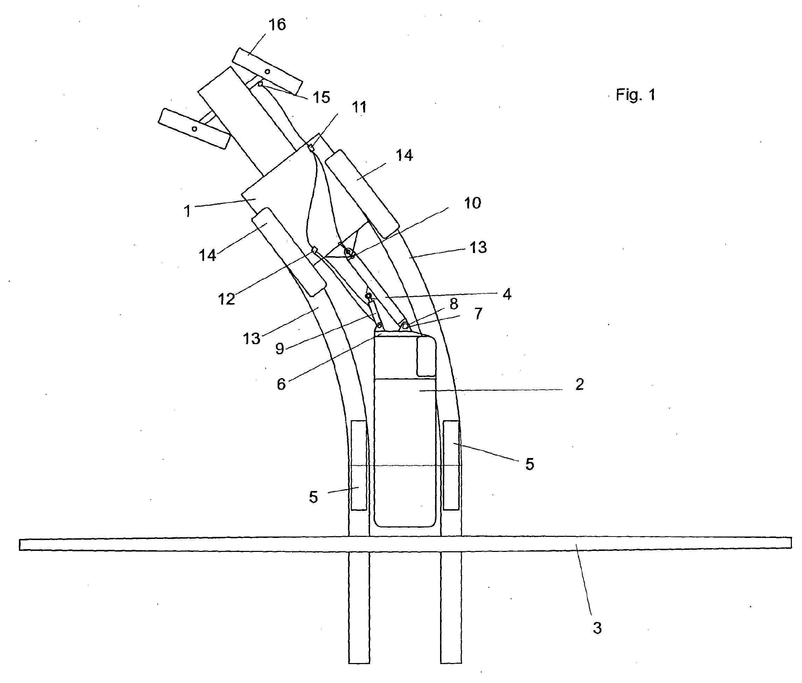

An der als Ackerschlepper ausgebildeten Zugmaschine 1 ist die landwirtschaftliche Verteilmaschine 2, die im Ausführungsbeispiel als eine ein Verteilergestänge 3 aufweisende Feldspritze ausgebildet ist, mittels der Zugdeichsel 4 an die Anhängevorrichtung des Ackerschleppers 1 angekuppelt. Die Feldspritze 2 weist ein Fahrgestell mit den Laufrädern 5 und dem Rahmen 6 auf, wobei die Zugdeichsel 4 mittels eines eine aufrechte Achse 7 aufweisenden Gelenkes 8 verschwenkbar am Rahmen 6 der Feldspritze 2 angekuppelt ist. Zwischen der Deichsel 4 und dem Rahmen 6 ist ein als doppeltwirkender Hydraulikzylinder 9 ausgebildetes Stellelement zum Verschwenken der Deichsel 4 um die aufrechte Achse 7 angeordnet. Zwischen dem Ackerschlepper 1 und der Zugdeichsel 4 ist ein Winkelsensor 10 angeordnet, der den Winkel zwischen dem Schlepper 1 und der Zugdeichsel 4 ermittelt. Dieser Sensor 10 ist mit dem Bordcomputer 11 verbunden. Der Sensor 10 übermittelt Signale an den Bordcomputer 11. Aufgrund dieser Signale übermittelt der Bordcomputer 11 Stellsignale an das Steuergerät 12 des Hydraulikzylinders 9, so dass der Hydraulikzylinder 9 derart zum Verschwenken der Deichsel 4 angesteuert wird, dass die Räder 5 der Feldspritze 2 zumindest annähernd der Radspur 13 der Hinterräder 14 der Zugmaschine 1 folgen, wie Fig. 1 zeigt.

Weiterhin ist ein Fahrgeschwindigkeitssensor 15 mit dem Bordcomputer 11 verbunden, der im Ausführungsbeispiel im Bereich eines der Vorderräder 16 des Zugfahrzeugs 1 angeordnet ist. Dieser Fahrgeschwindigkeitssensor 15 übermittelt Signale an den Bordcomputer 11, aus welchen der Bordcomputer 11 die aktuelle Fahrgeschwindigkeit ermittelt.

In dem Bordcomputer 11 ist ein Programm hinterlegt, um in geschwindigkeitsabhängiger Weise das Steuergerät 12 des Hydraulikzylinders 9 anzusteuern, es sich so eine geschwindigkeitsabhängige Steuerungseinrichtung ergibt. Der doppeltwirkende Hydraulikzylinder 9 wird von der von dem Bordcomputer 11 und den Steuerungsgerät 12, also der geschwindigkeitsabhängigen Steuerungseinrichtung derart angesteuert, dass oberhalb einer festgelegten Fahrgeschwindigkeit Vₘₐₓ aufgrund der an den als doppeltwirkende Hydraulikzylinder ausgebildeten Stellelement übermittelten Signale die Deichsel 4 im verringerten Maße verschwenkt wird.

Hierbei ist das Programm bzw. die geschwindigkeitsabhängige Steuerungseinrichtung derart ausgelegt, dass bei zunehmender Fahrtgeschwindigkeit von den Bordcomputer 11 Signale zum Verschwenken der Deichsel 4 mit verringerter Verschwenkungsgeschwindigkeit an das 9 übermittelt werden. Somit werden bei sich erhöhender Fahrgeschwindigkeit Signale zum Verschwenken der Deichsel mit abnehmender Verschwenkungsgeschwindigkeit übermittelt werden.

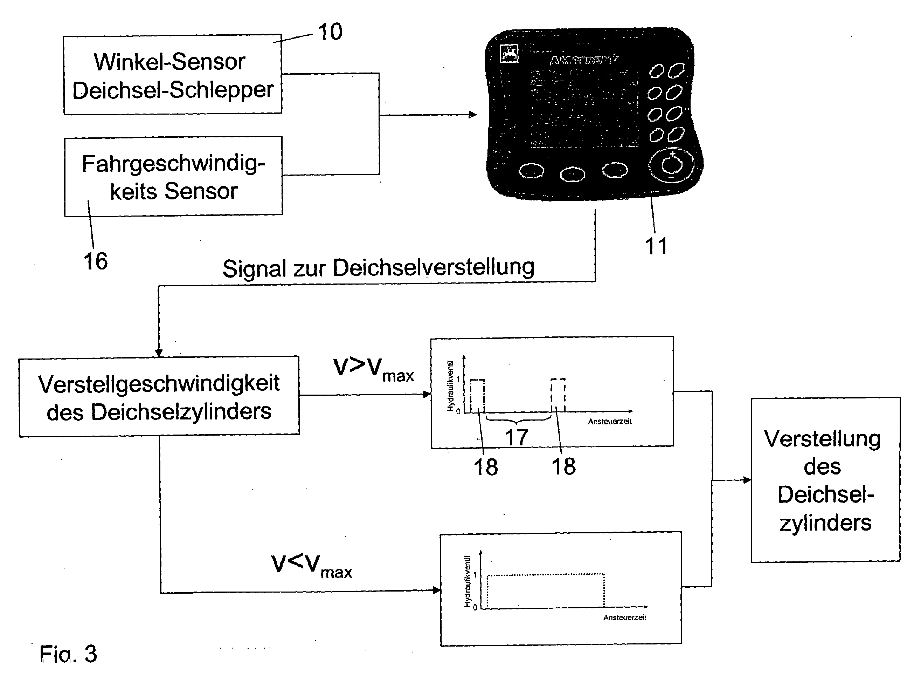

Hierbei kann diese Übermittelung nach folgendem Funktionsschema, wie es in Fig. 3 dargestellt ist, erfolgen:

Sowohl der Winkelsensor 10 zwischen Deichsel 4 und Schlepper 1 wie auch der Fahrgeschwindigkeitssensor 15 übermitteln ihre entsprechenden Signale an den Bordcomputer 11. Aufgrund dieser Signale wertet das im Bordcomputer 11 hinterlegte Programm aus, ob und in welcher Weise die Deichsel 4 zu verstellen ist. Wenn auf Grund der Signale des Winkelsensors 10 der Bordcomputer 11 erkennt, dass eine Kurvenfahrt vorliegt, wird ein entsprechendes Signal zur Deichselverstellung vom Bordcomputer 11 an die Steuereinrichtung 12 des Deichselzylinders 11 übermittelt. Hierbei wird dann entsprechend der Fahrgeschwindigkeit V entschieden, wie die Verstellgeschwindigkeit des Deichselzylinders 11 sein muss, um eine Kippgefahr der Verteilmaschine 2 zu vermeiden. Wenn die tatsächliche Fahrgeschwindigkeit V größer als der festgelegte Grenzwert Vₘₐₓ. ist, d.h. die zulässige Maximalgeschwindigkeit Vₘₐₓ. für das Durchfahren der Kurve, wobei die Räder 5 der Radspur 13 der Hinterräder 14 der Zugmaschine 1 folgen, wird überschritten, wird das als Hydraulikventil ausgebildete Steuerungsgerät 12 mit einer verringerten bzw. getackten Ansteuerzeit angesteuert. Somit verschwenkt der Deichselzylinder 9 die Deichsel 4 in verringerter und verlangsamter Weise. Hierbei kann die entsprechende Tacktzeit im Bordcomputer 11 entsprechend eingestellt werden. Somit weist die Steuerungseinrichtung zur Ansteuerung des Stellelementes 9 ein geschwindigkeitsabhängiges Zeitglied auf, welches auch entsprechend die Fahrgeschwindigkeit berücksichtigen kann. Hierbei kann mittels des Zeitgliedes die einstellbare Betätigungszeit des Stellelementes 9 und die zwischen den einzelnen Betätigungszeiten liegenden Pausenzeit eingestellt werden. Somit sind die Betätigungszeiten oder - intervalle einstellbar. Die als Hydraulikventil ausgebildete Einstelleinrichtung 12 kann beispielsweise als Proportionalventil ausgebildet sein.

Somit wird also durch das geschwindigkeitsabhängige Zeitglied, also durch die Pausenzeit 17 zwischen den einzelnen Ansteuerungszyklen 18 des Steuergerätes 12 des Hydraulikzylinders 9 verhindert, dass bei engen Kurven und bei nicht angepasster Fahrgeschwindigkeit am Vorgewende die kritische Endstellung des Zylinders 9 erreicht werden kann.

Die Pausenzeiten 17 können sowohl von dem Maschinentyp, der Spurweite und der Fahrgeschwindigkeit V abhängig sein.

Wenn der Bordcomputer 11 aufgrund des hinterlegten Programms und des übermittelten Signals des Fahrgeschwindigkeitssensors 15 feststeht, dass die tatsächliche Fahrgeschwindigkeit V beim Durchfahren der Kurve kleiner als die festgelegte maximale Kurvengeschwindigkeit Vₘₐₓ ist, wird aufgrund der vom Bordcomputer 11 über das Steuergerät 12 der doppeltwirkende Hydraulikzylinder 11, der zwischen der Deichsel 4 und dem Rahmen 6 angeordnet ist, in gewohnter Weise angesteuert, so dass beim Durchfahren der Kurve die Räder 5 der Verteilmaschine 2 der Radspur 13 der Hinterräder 14 der Zugmaschine 1 folgen können.

## Patentansprüche

1. An eine Zugmaschine über eine. Zugdeichsel ankuppelbare landwirtschaftliche Verteilmaschine, wie Feldspritze oder Düngerstreuer, mit einem Laufräder und Rahmen aufweisenden Fahrgestell, wobei die Zugdeichsel mittels eines eine aufrechte Achse aufweisenden Gelenkes verschwenkbar am Rahmen und zwischen der Deichsel und dem Rahmen zumindest ein Stellelement zum Verschwenken der Deichsel um die aufrechte Achse angeordnet ist, wobei Mittel vorhanden sind, um das Stellelement derart zum Verschwenken der Deichsel anzusteuern, dass die Räder der Verteilmaschine zumindest annähernd der Radspur der Hinterräder der Zugmaschine folgen, **dadurch gekennzeichnet, dass** den Mitteln (9,12) eine geschwindigkeitsabhängige Steuerungseinrichtung (10,11,16) zugeordnet ist, und zwar derart, dass oberhalb einer festgelegten Fahrgeschwindigkeit (Vₘₐₓ)aufgrund der an das Stellelement von der Steuerungseinrichtung (11) übermittelten Signale die Deichsel (4) im verringerten Maße verschwenkt wird.

2. Verteilmaschine nach Anspruch 1, **dadurch gekennzeichnet, dass** bei zunehmender Fahrgeschwindigkeit (V) von der Steuerungseinrichtung (11) Signale zum Verschwenken der Deichsel (4) mit verringerter Verschwenkungsgeschwindigkeit an das Stellelement (9) übermittelt werden.

3. Verteilmaschine nach einem oder mehreren der vorstehenden Ansprüche, **dadurch gekennzeichnet, dass** bei sich erhöhender Fahrgeschwindigkeit (V) Signale zum Verschwenken der Deichsel (4) mit abnehmender Verschwenkungsgeschwindigkeit übermittelt werden.

4. Verteilmaschine nach einem oder mehreren der vorstehenden Ansprüche, **dadurch gekennzeichnet, dass** die Steuerungseinrichtung (11) das Stellelement mit vorzugsweise zeitlich einstellbaren Taktzeiten (17,18) ansteuert.

5. Verteilmaschine nach Anspruch 4, **dadurch gekennzeichnet, dass** die Steuerungseinrichtung (11) zur Ansteuerung des Stellelementes ein geschwindigkeitsabhängiges Zeitglied aufweist.

6. Verteilmaschine nach Anspruch 4 und /oder 5, **dadurch gekennzeichnet, dass** das Zeitglied die einstellbare Betätigungszeit des Stellelementes (9) und die zwischen den einzelnen Betätigungszeiten (18) liegende Pausenzeit (17) aufweist.

7. Verteilmaschine nach einem oder mehreren der vorstehenden Ansprüche, **dadurch gekennzeichnet, dass** die Betätigungszeiten (18) und/oder -intervalle (17) einstellbar sind.

8. Verteilmaschine nach einem oder mehreren der vorstehenden Ansprüche, **dadurch gekennzeichnet, dass** die Verschwenkungsgeschwindigkeit der Deichsel (4) durch das Verstellelement (9) durch eine dem Stellelement (4) zugeordnete und von der Steuerungseinrichtung (11) ansteuerbare Einstelleinrichtung (12) einstellbar ist.

9. Verteilmaschine nach Anspruch 8, **dadurch gekennzeichnet, dass** das Stellelement als Hydraulikzylinder (9) ausgebildet ist, dass die Einstelleinrichtung als Hydraulikventil (12), vorzugsweise als Proportionalventil ausgebildet ist.
